# EUROPEAN PATENT SPECIFICATION

(11) **EP 3 026 291 B1**
(45) Date of publication and mention of the grant of the patent: **03.04.2019**
(21) Application number: 15189649.5
(22) Date of filing: 13.10.2015
(51) Int. Cl.: F16F 9/53, F16F 15/00, F16F 15/027

(54) **ACTIVE COMPENSATION MODULE HAVING INTEGRATED THERMAL DEFORMATION AND CHATTER COMPENSATION ACTUATOR**
AKTIVKOMPENSATIONSMODUL MIT INTEGRIERTEM KOMPENSATIONSAKTUATOR VON THERMISCHER VERFORMUNG UND FLATTERN
MODULE DE COMPENSATION ACTIVE PRÉSENTANT UNE DÉFORMATION THERMIQUE ET UN ACTIONNEUR DE COMPENSATION DE BROUTAGE INTÉGRÉS

(30) Priority: 28.11.2014 KR 20140168410
(43) Date of publication of application: 01.06.2016
(73) Proprietor: Korea Institute Of Machinery & Materials, Yuseong-gu Daejeon 305-343 (KR)
(72) Inventor: KIM, Dong-Hoon, Daejeon (KR); SONG, JOONYUB, Daejeon (KR)
(74) Representative: Delorme, Nicolas

(56) References cited:
- EP-A1- 2 615 325
- EP-A2- 0 957 288
- JP-A- H09 225 883
- JP-A- 2005 127 443
- YOUNG-MIN HAN ET AL: "Design and control of a hybrid mount featuring a magnetorheological fluid and a piezostack;Design and control of a hybrid mount featuring a magnetorheological fluid and a piezostack", SMART MATERIALS AND STRUCTURES, IOP PUBLISHING LTD., BRISTOL, GB, vol. 20, no. 7, 22 June 2011 (2011-06-22), page 75019, XP020207121, ISSN: 0964-1726, DOI: 10.1088/0964-1726/20/7/075019

## Description

### BACKGROUND OF THE INVENTION

### (a) Field of the Invention

The present invention relates to an active compensation device that reduces chatter generated in an industrial machine or structure and compensates a process location according to thermal deformation of the structure.

### (b) Description of the Related Art

An industrial structure or machine inevitably experiences chatter vibration due to a design error or disturbance, and such chatter not only deteriorates durability of the machine and the structure but also deteriorates the degree of precision of a manufactured product and a processing product in a manufacturing and processing field, and deteriorates stability in a large-scaled plant field, thereby causing a serious loss.

In order to reduce occurrence of chatter, a manual chatter reducing method, an active chatter reducing method, and a semi-active (semi-manual) chatter reducing method may be used. The manual chatter reducing method is a method for reducing undesired external chatter using an elastic material such as rubber or a fluid such as silicon oil or air. The active chatter reducing method is a method for sensing a system to which the active chatter reducing method is applied using various smart actuators (e.g., a piezoelectric material, a memory alloy, an electrically operated polymer, and the like), which are active actuators, to apply an appropriate damping force according to a situation. The semi-active chatter reducing method includes features of both of the manual and active methods, and is a method using a material of which a damping characteristic is changed when an electromagnetic field such as an electro-rheological (ER) fluid or a magneto-rheological (MR) fluid is generated.

However, although chatter of the processing product may be reduced through the above-stated configuration, an aftershock or torsion that may occur while the chatter is reduced is not considered so that the degree of precision in processing of the product may be deteriorated according to additional minute vibration and displacement.

Additionally, when the processing product is exposed to a high-temperature environment for a long period of time, processing position displacement due to deformation of the processing product may occur, and accordingly development and research for a method for compensation of the displacement have been required.

EP 2 615 325, which represents the closest prior art, and EP 0 957 288 disclose vibration control apparatuses.

The above information disclosed in this Background section is only for enhancement of understanding of the background of the invention and therefore it may contain information that does not form the prior art that is already known in this country to a person of ordinary skill in the art.

### SUMMARY OF THE INVENTION

The present invention has been made in an effort to provide an active integrated heat and chatter compensation device in which an MR actuator and a magnetostrictive actuator that compensate an aftershock and torsion due to reduction of chatter and compensate a processing position due to thermal deformation of the processing product is provided.

The invention relates to an active compensation device according to claim 1.

An upper side of the body may be fixed to a mounting portion where the processing product is mounted, or an upper side of the MR shaft is fixed to the mounting portion where the processing product is mounted such that chatter of the processing product mounted to the mounting portion is reduced.

The MR actuator may include an MR position spring provided between one end of the MR shaft and one side of the body for location restoration of the MR shaft.

The body may include an upper cover that is reciprocally movable in a vertical direction and provided in an upper side of the upper cover, and one end of the magnetostrictive element may be connected to the upper cover to compensate displacement of the processing product mounted in the processing product mounting portion by the displacement of the magnetostrictive element.

In addition, the magnetostrictive actuator may include a ferrite element provided in an upper side of the second bobbin portion.

Further, the magnetostrictive actuator may include a magnetostrictive position spring provide between an upper side of the second bobbin portion and the bottom side of the upper cover for location restoration of the upper cover.

The active compensation device may include: a chatter detecting sensor for sensing chatter generated in the processing product; a displacement detecting sensor for sensing displacement of the processing product; and a controller controlling a current applied to the first coil through a chatter signal of the chatter detecting sensor, and controlling a current applied to the second coil through a displacement signal of the displacement detecting sensor provided in the processing product mounting portion.

In this case, the controller may receive a displacement signal of the processing product through a data base in which the displacement signal is stored, the displacement signal of the processing product according to time is acquired through a thermal deformation simulation of the processing product, to control a current applied to the second coil.

The active compensation device according to the exemplary embodiment of the present invention can change a resonance frequency of the MR actuator so that resonance avoidance with respect to externally applied chatter can be actively performed, and can reduce a level of chatter that is not included in a resonance band by changing a direction of rigidity of a chatter reduced media.

In addition, an aftershock and torsion due to reduction of chatter can be compensated through the magnetostrictive actuator to compensate a processing position of the processing product, thereby increasing the degree of processing precision.

Further, processing precision can be increased by compensating the processing position displacement due to thermal deformation of the processing product.

Also, the MR actuator and the magnetostrictive actuator are integrally formed to reduce volume of the active compensation device.

### BRIEF DESCRIPTION OF THE DRAWINGS

FIG. 1 is a schematic cross-sectional view of displacement generated in a processing product when chatter and thermal deformation occur in the processing product during drilling.
FIG. 2 is a schematic diagram of a machine tool to which an active compensation device according to an exemplary embodiment of the present invention is applied.
FIG. 3 is a perspective view of an installation example of the active compensation device according to the exemplary embodiment of the present invention.
FIG. 4 is a cross-sectional perspective view of the active compensation device according to the exemplary embodiment of the present invention.
FIG. 5 is a cross-sectional view of the active compensation device according to the exemplary embodiment of the present invention.
FIG. 6 is a cross-sectional view of an operation state of an MR actuator.
FIG. 7 is a cross-sectional view of an operation state of a magnetostrictive actuator.

### DETAILED DESCRIPTION OF THE EMBODIMENTS

The present invention will be described more fully hereinafter with reference to the accompanying drawings, in which exemplary embodiments of the invention are shown. As those skilled in the art would realize, the described embodiments may be modified in various different ways, all without departing from the spirit or scope of the present invention. The drawings and description are to be regarded as illustrative in nature and not restrictive. Like reference numerals designate like elements throughout the specification.

Displacement caused by chatter and thermal deformation that occur during processing of a processing product will be described first, and then an active compensation device will be described.

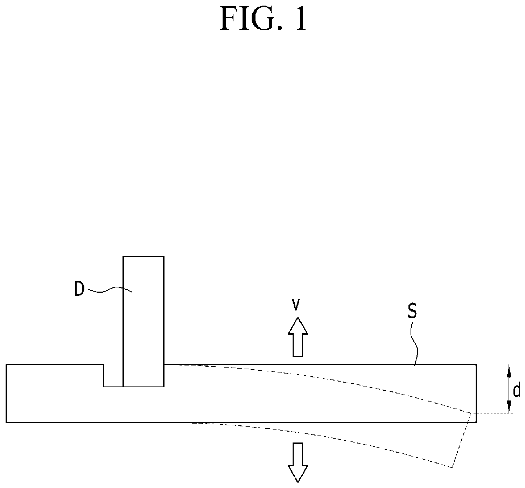

FIG. 1 illustrates chatter V and displacement d that may occur in a processing product S during drilling using a drill D with a machine tool. As shown in the drawing, when the upper surface of the processing product S is processed with the drill D, the processing product S may experience vertical chatter V, and due to the occurrence of chatter V, noise and deterioration of processing precision may be caused. When a processing range is large, the chatter V may hardly affect the processing precision, but the influence of the chatter V on the processing precision may be increased in processing in a minute range.

Further, when the processing product S is exposed to a high temperature for a long period of time, a processing location is changed according to the displacement d of the processing product S, thereby deteriorating processing precision.

In order to solve such a problem, an active compensation device 1000 according to an exemplary embodiment of the present invention the present invention will be described with reference to the accompanying drawings.

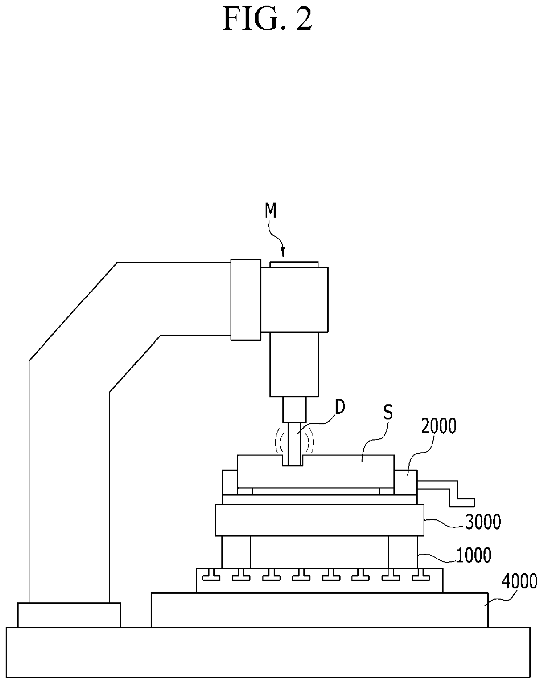

FIG. 2 illustrates a schematic diagram of a machine tool to which the active compensation device 1000 according to the exemplary embodiment of the present invention is applied. As shown in FIG. 2, the machine tool M includes a stage 4000 where the processing product S is mounted and a processing product mounting portion 3000 that fixes the processing product S, and the processing product may be fixed through a vise 2000 provided in the processing product mounting portion 3000. Further, the active compensation device 1000 is provided between the processing product mounting portion 3000 and the stage 4000 to reduce chatter of the processing product and compensate displacement due to thermal deformation of the processing product S caused by a drilling process performed on the processing product S using the drill D. Although it is illustrated in the drawing that the processing product S is fixed by the vise 2000, any configuration that can fix the processing product S is applicable, and the active compensation device 1000 is provided between the processing product mounting portion 3000 and the stage 4000 in the drawing, but the active compensation device 1000 can be disposed in any place as long as it can reduce chatter and compensate displacement of the processing product.

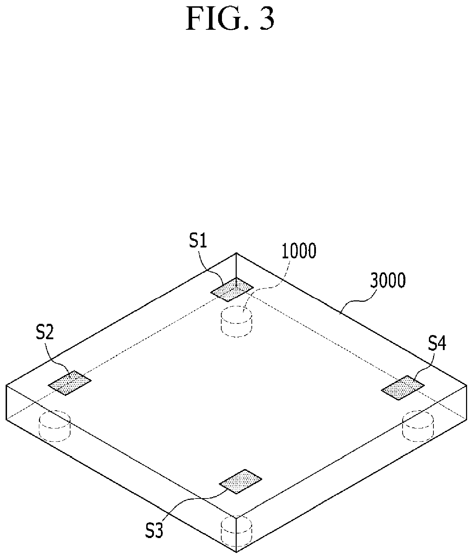

FIG. 3 illustrates a perspective view of an installation example of the active compensation device 1000 according to the exemplary embodiment of the present invention. As shown in the drawing, the active compensation device 1000 is provided in plural in the bottom surface of the processing product mounting portion 3000, and preferably, the active compensation devices 1000 may be disposed at four corners of the mounting portion 3000. Although there are four active compensation devices 1000 disposed in the drawing, three or more active compensation devices 1000 may be disposed as long as they stably support the mounting portion.

Further, chatter detecting sensors S1 and S3 that sense chatter generated in the processing product S and displacement detecting sensors S2 and S4 that sense displacement of the processing product S may be provided in the upper side of the mounting portion 3000. As the chatter detecting sensors S1 and S3 or the displacement detecting sensors S2 and S4, a gravity detecting sensor, an acceleration sensor, an acceleration sensor, a gyro sensor, and the like may be applicable. Further, the chatter detecting sensors S1 and S3 and the displacement detecting sensors S2 and S4 may be respectively provided as a pair and disposed at opposite corners, respectively, but each pair may be disposed at each of the four corners for precise sensing.

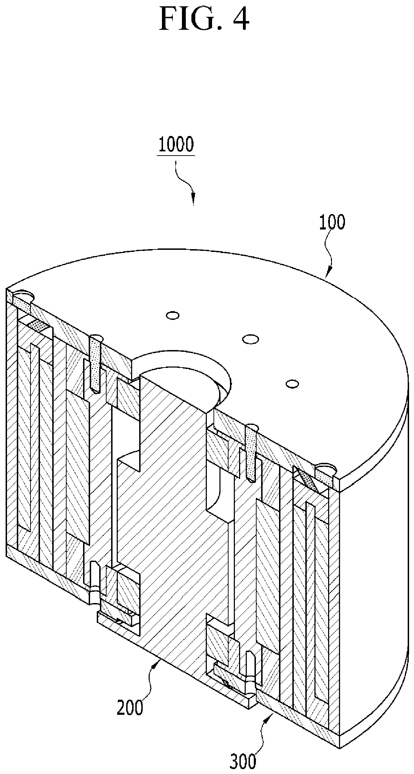

FIG. 4 illustrates a cross-sectional perspective view of the active compensation device 1000 according to the exemplary embodiment of the present invention. As shown in FIG. 4, the active compensation device 1000 may be formed of a body 100, an MR actuator 200 received at an inner side in a radial direction of the body 100, and a magnetostrictive actuator 300 received at an outer side in the radial direction of the body 100. The MR actuator 200 is formed to reduce chatter of the processing product S through a damping force that corresponds to amplitude of the chatter generated in the processing product S by changing viscosity of an MR fluid received therein. Further, the magnetostrictive actuator 300 may be formed to compensate location displacement due to thermal deformation of the processing product S through length displacement of a magnetostrictive element that is changed by intensity of a magnetic field. According to the exemplary embodiment of the present invention, the MR actuator 200 and the magnetostrictive actuator 300 are integrally formed in the body 100 to reduce volume of the active compensation device 1000 and to effectively perform reduction of chatter of the processing product S and compensation of location displacement.

Hereinafter, a detailed configuration of such an integral active compensation device 1000 according to the exemplary embodiment of the present invention will be described in detail.

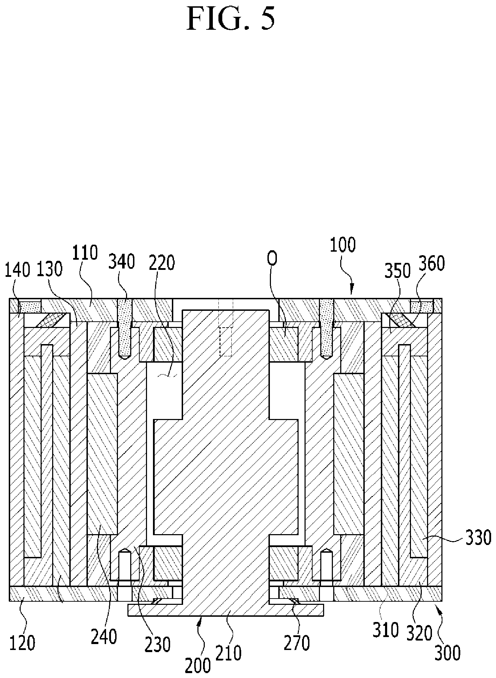

FIG. 5 illustrates a cross-sectional view of the active compensation device according to the exemplary embodiment of the present invention. As shown in FIG. 5, the active compensation device 1000 is formed of the body 100, the MR actuator 200, and the magnetostrictive actuator 300. The body 100 is formed in the shape of a cylinder having a receiving space formed therein, an upper cover 110 surrounding an upper side of the body 100, a lower cover 120 surrounding a lower side of the body 100, a ring-shaped first cover 130 surrounding a side surface of the MR actuator 200, and a ring-shaped second cover 140 surrounding a side surface of the magnetostrictive actuator 300. In this case, the upper cover 110 may be vertically reciprocally movable by displacement of the magnetostrictive actuator 300.

The MR actuator 200 is formed of a first bobbin portion 230 in which an MR fluid receiving portion 220 that receives an MR fluid is formed, a first coil 240 wound around an outer side of the first bobbin portion 230, and an MR shaft 210 fit in a vertical length direction to the MR fluid receiving portion 220 and rotatable in the vertical length direction. That is, intensity of a magnetic force applied to the MR fluid is changed by a current applied to the first coil 240, and accordingly viscosity of the MR fluid may be changed. Thus, a damping force of the MR shaft 210 can be changed according to viscosity change of the MR fluid. In this case, the upper cover 110 is fixed to the bottom surface of the processing product mounting portion 3000, and a lower end of the MR shaft 210 is fixed to the stage 4000. Thus, when chatter occurs in the processing product S, the chatter is transferred to the body 100 through the processing product mounting portion 3000, and the damping force is transferred to the processing product mounting portion 3000 according to viscosity of the MR fluid formed in the MR shaft 210 such that the chatter of the processing product S can be reduced. An oil seal O is provided in a combining portion of the MR shaft 210 and the upper cover 110 to prevent external leakage of the MR fluid. Further, the oil seal O is also provided in a combining portion of the MR shaft 210 and the lower cover 120 to prevent external leakage of the MR fluid. In addition, an MR position spring 270 is provided for location restoration of the MR shaft 210 between a lower end of the MR shaft 210 and the bottom surface of the lower cover 120.

The magnetostrictive actuator 300 is formed of a second bobbin portion 320 in which the MR actuator 200 is received, a second coil 330 wound around the outer side of the second bobbin portion 320, and a magnetostrictive element 310 provided between the second bobbin portion 320 and the first cover 130 and of which vertical length direction displacement is changed according to intensity of a magnetic force of the second coil 330. That is, intensity of the magnetic force applied to the magnetostrictive element 310 is changed by a current applied to the second coil 330, and accordingly, a vertical length of the magnetostrictive element 310 may be changed. An upper end of the magnetostrictive element 310 is combined to a lower end of the upper cover 110 such that the upper cover 110 is reciprocally movable along the vertical length direction according to the vertical length variation of the magnetostrictive element 310, and accordingly, a vertical location of the processing product mounting portion 3000 is changed. In this case, a guide bar 340 may be protruded upward from an upper side of the first bobbin portion 230 to guide vertical movement of the upper cover 110. The guide bar 340 may be provided in plural and radially disposed with respect to an axis direction. Further, a ferrite element 350 may be provided in an upper side of the second bobbin portion 320. The ferrite element 350 is formed of an oxidized iron-based magnetic ceramic, and generates a magnetic field. The ferrite element 350 amplifies or maintains a magnetic force generated from the second coil 330. Further, a magnetostrictive position spring 360 is provided between an upper side of the ferrite element 350 and the bottom side of the upper cover 110 for location restoration of the upper cover 110.

When location displacement due to thermal deformation of the processing product S occurs, the magnetostrictive actuator 300 compensates a location of the processing product S by changing the length of the magnetostrictive element 310.

Although not illustrated in the drawing, the active compensation device 1000 further includes a controller (not shown) that controls a damping force of the MR actuator 200 so as to correspond to the chatter by controlling a current applied to the first coil 240 through chatter signals of the chatter detecting sensors S1 and S3 and controls displacement of the magnetostrictive actuator 300 so as to correspond to displacement of the processing product S by controlling the current applied to the second coil 330 through displacement signals of the displacement detecting sensors S2 and S4.

In this case, according to another exemplary embodiment for controlling displacement of the magnetostrictive actuator 300, the controller controls the current applied to the second coil 330 through displacement information stored in a database so as to control displacement of the magnetostrictive actuator 300 corresponding to the displacement of the processing product S. The amount of displacement of the processing product S with respect to time is insignificant, and accordingly real-time displacement compensation is not required, and displacement of the processing product S due to thermal deformation is constant such that the amount of displacement is predictable without measuring the amount of displacement using a sensor. Thus, the amount of displacement of the processing product S with respect to time is stored as a statistical figure in a database through a thermal deformation simulation, and displacement of the magnetostrictive actuator 300 can be controlled based on the statistical figures stored in the database.

Detailed operation for chatter reduction and location compensation of the integral active compensation device 1000 will be described in further detail with reference to the accompanying drawings.

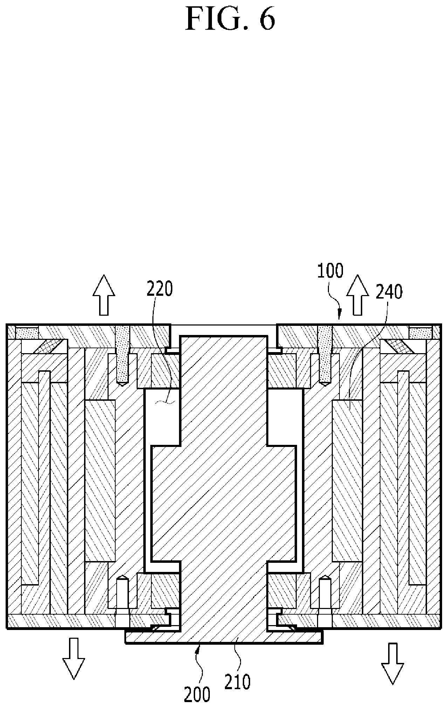

FIG. 6 illustrates a cross-sectional view of an operation state of the MR actuator 200 of the integral active compensation device 1000 according to the exemplary embodiment of the present invention.

First, the integral active compensation device 1000 according to the exemplary embodiment of the present invention is provided with the chatter detecting sensors S1 and S3 (refer to FIG. 3) on the processing product mounting portion 3000, and the chatter detecting sensors S1 and S3 sense amplitude of chatter generated from the processing product S and transmit a chatter signal to the controller. The controller receives the chatter signal and controls current intensity of the first coil 240 so as to apply a damping force that corresponds to the amplitude of the chatter to the processing product mounting portion 3000 such that a damping force between the MR shaft 210 and the body 100 can be controlled through viscosity variation of the MR fluid received in the MR fluid receiving portion 220 according to the current of the first coil 240.

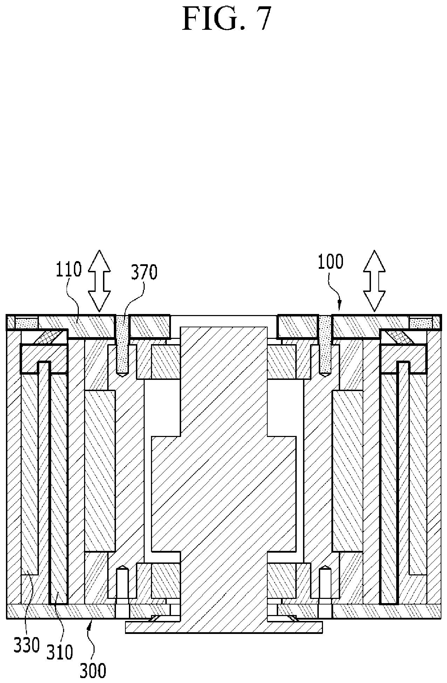

FIG. 7 illustrates a cross-sectional view of an operation state of the magnetostrictive actuator 300 of the integral active compensation device 1000 according to the exemplary embodiment of the present invention.

First, the integral active compensation device 1000 according to the exemplary embodiment of the present invention is provided with the displacement detecting sensors S2 and S4 (refer to FIG. 3) on the processing product mounting portion 3000, and the displacement detecting sensors S2 and S4 sense displacement according to thermal deformation occurring in the processing product S and transfer a displacement signal to the controller. The controller receives the displacement signal and controls current intensity of the second coil 330 to apply compensation displacement corresponding to the displacement to the processing product mounting portion 3000, and compensates location displacement of the processing product S through vertical rotation of the processing product mounting portion 3000 by rotating the upper cover 110 upward or downward through vertical directional displacement of the magnetostrictive element 310.

While this invention has been described in connection with what is presently considered to be practical exemplary embodiments, it is to be understood that the invention is not limited to the disclosed embodiments, but, on the contrary, is intended to cover various modifications and equivalent arrangements included within the scope of the appended claims.

**<Description of symbols>**

| | |
|---|---|
| 1000: active compensation device | |
| 100: body | 110: upper cover |
| 120: lower cover | 130: first cover |
| 140: second cover | |
| 200: MR actuator | 210: MR shaft |
| 220: MR fluid receiving portion | 230: first bobbin portion |
| 240: first coil | |
| 300: magnetostrictive actuator | 310: magnetostrictive element |
| 320: second bobbin portion | 330: second coil |
| 350: ferrite element | |

## Claims

1. An active compensation device (1000) to reduce chatter of a processing product (S) and to compensate displacement due to thermal deformation of the processing product (S), comprising:
a body (100) in which a receiving space is formed;
an MR actuator (200) provided in an inner side of the receiving space and of which a damping force is changed according to change in viscosity of an MR fluid; and
a magnetostrictive actuator (300) provided in an outer side of the receiving space and including a magnetostrictive element (310) of which length displacement occurs due to a magnetic force,
**characterized in that** the MR actuator (200) comprises:
a first bobbin portion (230) where a fluid space filled with the MR fluid is formed, and around which a first coil (240) that generates a magnetic field is wound to change viscosity of the MR fluid; and
an MR shaft (210) fitted to be reciprocally movable in an axis direction in the first bobbin portion (230) and of which a damping force is changed due to viscosity variation of the MR fluid;
**in that** the magnetostrictive actuator (300) comprises a second bobbin portion (320) where the first bobbin portion (230) is received and around which a second coil (330) that forms a magnetic field is externally wound to change displacement of the magnetostrictive element (310), and
**in that** the magnetostrictive element (310) is provided between the first bobbin portion (230) and the second bobbin portion (320) such that displacement is generated in a vertical direction by the magnetic field of the second coil (330).

2. The active compensation device of claim 1, wherein an upper side of the body (100) is fixed to a mounting portion (3000) where the processing product (S) is mounted , or an upper side of the MR shaft (210) is fixed to the mounting portion (3000) where the processing product (S) is mounted such that chatter of the processing product (S) mounted to the mounting portion (3000) is reduced.

3. The active compensation device of claim 1, wherein the MR actuator (200) comprises an MR position spring provided between one end of the MR shaft (210) and one side of the body (100) for location restoration of the MR shaft (210).

4. The active compensation device of claim 1, wherein the body (100) comprises an upper cover (110) that is reciprocally movable in a vertical direction and provided in an upper side of the upper cover (110), and
one end of the magnetostrictive element (310) is connected to the upper cover (110) to compensate displacement of the processing product (S) mounted in the processing product mounting portion (3000) by the displacement of the magnetostrictive element (310).

5. The active compensation device of claim 1, wherein the magnetostrictive actuator (300) comprises a ferrite element (350) provided in an upper side of the second bobbin portion (320).

6. The active compensation device of claim 4, wherein the magnetostrictive actuator (300) comprises a magnetostrictive position spring provide between an upper side of the second bobbin portion (320) and the bottom side of the upper cover (110) for location restoration of the upper cover (110).

7. The active compensation device of claim 1, comprising:
a chatter detecting sensor for sensing chatter generated in the processing product (S);
a displacement detecting sensor for sensing displacement of the processing product (S); and
a controller controlling a current applied to the first coil (240) through a chatter signal of the chatter detecting sensor, and controlling a current applied to the second coil (330) through a displacement signal of the displacement detecting sensor provided in the processing product mounting portion (3000).

8. The active compensation device of claim 1, wherein the controller receives a displacement signal of the processing product (S) through a data base in which the displacement signal is stored, the displacement signal of the processing product (S) according to time is acquired through a thermal deformation simulation of the processing product (S), to control a current applied to the second coil (330).

## Patentansprüche

1. Aktive Kompensationsvorrichtung (1000), um Rattern eines Verarbeitungsprodukts (S) zu verringern und Verschiebung aufgrund thermischer Verformung des Verarbeitungsprodukts (S) zu kompensieren, umfassend:
einen Körper (100), in dem eine Aufnahmeraum gebildet ist;
einen MR-Aktuator (200), der in einer Innenseite des Aufnahmeraums bereitgestellt ist und von dem eine Dämpfungskraft gemäß einer Änderung in der Viskosität eines MR-Fluids verändert wird; und
einen magnetostriktiven Aktuator (300), der in einer Außenseite des Aufnahmeraums bereitgestellt ist und ein magnetostriktives Element (310) beinhaltet, dessen Längenverschiebung aufgrund einer magnetischen Kraft stattfindet,
**dadurch gekennzeichnet, dass** der MR-Aktuator (200) umfasst:
einen ersten Spulenkörperabschnitt (230), in dem ein mit dem MR-Fluid gefüllter Fluidraum gebildet ist, und um den eine erste Spule (240), die ein Magnetfeld erzeugt, gewickelt ist, um die Viskosität des MR-Fluids zu verändern; und
einen MR-Schaft (210), der eingepasst ist, um in dem ersten Spulenkörperabschnitt (230) in einer Achsenrichtung wechselseitig beweglich zu sein, und von dem eine Dämpfungskraft aufgrund der Viskositätsvariation des MR-Fluids verändert wird;
dadurch, dass der magnetostriktive Aktuator (300) einen zweiten Spulenkörperabschnitt (320) umfasst, in dem der erste Spulenkörperabschnitt (230) aufgenommen ist und um den herum eine zweite Spule (330), die ein Magnetfeld bildet, extern herum gewickelt ist, um die Verschiebung des magnetostriktiven Elements (310) zu verändern, und
dadurch, dass das magnetostriktive Element (310) zwischen dem ersten Spulenkörperabschnitt (230) und dem zweiten Spulenkörperabschnitt (320) bereitgestellt ist, sodass Verschiebung durch das Magnetfeld der zweiten Spule (330) in einer vertikalen Richtung erzeugt wird.

2. Aktive Kompensationsvorrichtung nach Anspruch 1, wobei eine obere Seite des Körpers (100) an einen Montageabschnitt (3000) fixiert ist, an dem das Verarbeitungsprodukt (S) montiert ist, oder eine obere Seite des MR-Schafts (210) an dem Montageabschnitt (3000) fixiert ist, an dem das Verarbeitungsprodukt (S) montiert ist, sodass Rattern des an den Montageabschnitt (3000) montierten Verarbeitungsprodukts (S) verringert wird.

3. Aktive Kompensationsvorrichtung nach Anspruch 1, wobei der MR-Aktuator (200) eine zwischen einem Ende des MR-Schafts (210) und einer Seite des Körpers (100) zur Ortswiederherstellung des MR-Schafts (210) bereitgestellte MR-Positionsfeder umfasst.

4. Aktive Kompensationsvorrichtung nach Anspruch 1, wobei der Körper (100) eine obere Abdeckung (110) umfasst, die in einer vertikalen Richtung wechselseitig beweglich ist und in einer oberen Seite der oberen Abdeckung (110) bereitgestellt ist, und
ein Ende des magnetostriktiven Elements (310) mit der oberen Abdeckung (110) verbunden ist, um Verschiebung des in dem Verarbeitungsprodukt-Montageabschnitt (3000) montierten Verarbeitungsprodukts (S) durch die Verschiebung des magnetostriktiven Elements (310) zu kompensieren.

5. Aktive Kompensationsvorrichtung nach Anspruch 1, wobei der magnetostriktive Aktuator (300) ein in einer oberen Seite des zweiten Spulenkörperabschnitts (320) bereitgestelltes Ferritelement (350) umfasst.

6. Aktive Kompensationsvorrichtung nach Anspruch 4, wobei der magnetostriktive Aktuator (300) eine zwischen einer oberen Seite des zweiten Spulenkörperabschnitts (320) und der Unterseite der oberen Abdeckung (110) zur Ortswiederherstellung der oberen Abdeckung (110) bereitgestellte magnetostriktive Positionsfeder umfasst.

7. Aktive Kompensationsvorrichtung nach Anspruch 1, umfassend:
einen ratterdetektierenden Sensor zum Erfassen von in dem Verarbeitungsprodukt (S) erzeugten Rattern;
einen verschiebungdetektierenden Sensor zum Erfassen von in dem Verarbeitungsprodukt (S) erzeugter Verschiebung; und
eine Steuerung, die einen an die erste Spule (240) angelegten Strom durch ein Rattersignal des ratterdetektierenden Sensors steuert, und einen an die zweite Spule (330) angelegten Strom durch ein Verschiebungssignal des verschiebungdetektierenden Sensors steuert, die in dem Verarbeitungsprodukt-Montageabschnitt (3000) bereitgestellt ist.

8. Aktive Kompensationsvorrichtung nach Anspruch 1, wobei die Steuerung ein Verschiebungssignal des Verarbeitungsprodukts (S) von einer Datenbank empfängt, in der das Verschiebungssignal gespeichert ist, das Verschiebungssignal des Verarbeitungsprodukts (S) nach Zeit durch eine Thermalverformungssimulation des Verarbeitungsprodukts (S) erlangt wird, um einen an die zweite Spule (330) angelegten Strom zu steuern.

## Revendications

1. Dispositif de compensation active (1000) pour réduire un broutage d'un produit de traitement (S) et pour compenser un déplacement dû à une déformation thermique du produit de traitement (S), comprenant :
un corps (100) dans lequel un espace de réception est formé ;
un actionneur MR (200) prévu dans un côté interne de l'espace de réception et dont une force d'amortissement est modifiée selon une modification de viscosité d'un fluide MR ; et
un actionneur magnétostrictif (300) prévu dans un côté externe de l'espace de réception et comportant un élément magnétostrictif (310) dont le déplacement en longueur se produit en raison d'une force magnétique,
**caractérisé en ce que** l'actionneur MR (200) comprend :
une première partie de bobine (230) où un espace de fluide rempli du fluide MR est formé et autour de laquelle un premier enroulement (240) qui génère un champ magnétique est enroulé pour modifier la viscosité du fluide MR ; et
un arbre MR (210) ajusté pour être mobile en va-et-vient dans une direction d'axe dans la première partie de bobine (230) et dont une force d'amortissement est modifiée en raison d'une variation de viscosité du fluide MR ;
**en ce que** l'actionneur magnétostrictif (300) comprend une deuxième partie de bobine (320) où la première partie de bobine (230) est reçue et autour de laquelle un deuxième enroulement (330) qui forme un champ magnétique est enroulé à l'extérieur pour modifier le déplacement de l'élément magnétostrictif (310), et
**en ce que** l'élément magnétostrictif (310) est prévu entre la première partie de bobine (230) et la deuxième partie de bobine (320) de sorte qu'un déplacement soit généré dans une direction verticale par le champ magnétique du deuxième enroulement (330).

2. Dispositif de compensation active de la revendication 1, dans lequel un côté supérieur du corps (100) est fixé à une partie de montage (3000) où le produit de traitement (S) est monté, ou un côté supérieur de l'arbre MR (210) est fixé à la partie de montage (3000) où le produit de traitement (S) est monté de sorte qu'un broutage du produit de traitement (S) monté sur la partie de montage (3000) soit réduit.

3. Dispositif de compensation active de la revendication 1, dans lequel l'actionneur MR (200) comprend un ressort de position MR prévu entre une extrémité de l'arbre MR (210) et un côté du corps (100) pour une restauration d'emplacement de l'arbre MR (210).

4. Dispositif de compensation active de la revendication 1, dans lequel le corps (100) comprend un couvercle supérieur (110) qui est mobile en va-et-vient dans une direction verticale et prévu dans un côté supérieur du couvercle supérieur (110), et
une extrémité de l'élément magnétostrictif (310) est reliée au couvercle supérieur (110) pour compenser le déplacement du produit de traitement (S) monté dans la partie de montage de produit de traitement (3000) par le déplacement de l'élément magnétostrictif (310).

5. Dispositif de compensation active de la revendication 1, dans lequel l'actionneur magnétostrictif (300) comprend un élément en ferrite (350) prévu dans un côté supérieur de la deuxième partie de bobine (320).

6. Dispositif de compensation active de la revendication 4, dans lequel l'actionneur magnétostrictif (300) comprend un ressort de position magnétostrictif prévu entre un côté supérieur de la deuxième partie de bobine (320) et le côté inférieur du couvercle supérieur (110) pour une restauration d'emplacement du couvercle supérieur (110).

7. Dispositif de compensation active de la revendication 1, comprenant :
un capteur de détection de broutage pour détecter un broutage généré dans le produit de traitement (S) ;
un capteur de détection de déplacement pour détecter le déplacement du produit de traitement (S) ; et
un dispositif de commande commandant un courant appliqué au premier enroulement (240) par un signal de broutage du capteur de détection de broutage, et commandant un courant appliqué au deuxième enroulement (330) par un signal de déplacement du capteur de détection de déplacement prévu dans la partie de montage de produit de traitement (3000).

8. Dispositif de compensation active de la revendication 1, dans lequel le dispositif de commande reçoit un signal de déplacement du produit de traitement (S) par une base de données où le signal de déplacement est stocké, le signal de déplacement du produit de traitement (S) en fonction du temps est acquis par une simulation de déformation thermique du produit de traitement (S), pour commander un courant appliqué au deuxième enroulement (330).
